# EUROPEAN PATENT SPECIFICATION

(11) **EP 2 496 844 B1**
(45) Date of publication and mention of the grant of the patent: **31.05.2017**
(21) Application number: 10827235.2
(22) Date of filing: 20.10.2010
(51) Int. Cl.: F15B 15/22, F16H 61/28, F15B 15/28, G05D 16/00

(54) **ARRANGEMENT AND METHOD FOR DAMPING OF A PISTON MOVEMENT**
ANORDNUNG UND VERFAHREN ZUR DÄMPFUNG EINER KOLBENBEWEGUNG
SYSTÈME ET PROCÉDÉ ADAPTÉS POUR AMORTIR LE MOUVEMENT D'UN PISTON

(30) Priority: 02.11.2009 SE 0950814
(43) Date of publication of application: 12.09.2012
(73) Proprietor: Scania CV AB, 151 87 Södertälje (SE)
(72) Inventor: SCHLÜTER, Ortwin, S-153 95 Järna (SE)
(74) Representative: Scania CV AB
(86) International application number: PCT/SE2010/051133
(87) International publication number: WO 2011/053227

(56) References cited:
- EP-A2- 0 061 875
- DE-A1-102007 002 539
- GB-A- 2 163 224
- JP-A- 6 241 206
- US-A1- 2003 079 602
- US-A1- 2008 153 658
- US-A1- 2009 250 170
- US-B1- 6 612 196

## Description

### Technical field

The invention relates to an arrangement for damping of a piston movement in a compressed air cylinder according to the preamble of claim 1.

The invention refers also to a gearbox comprising the arrangement, and to a method for damping of a piston movement.

### Background

Various types of gearboxes are used in, for example, vehicles to adjust the power transmission from the vehicle's engine to the drives hafts which drive the vehicle's powered wheels. The gearbox comprises a main shaft and, parallel thereto, a countershaft, both of which have a number of gearwheels arranged round them. The number of gearwheels along the shafts depends on the number of gear positions in the gearbox.

Gear changing involves selected gearwheels being connected/disconnected to/from the drive shaft or the countershaft so that desired torque is transmitted to the drive shaft. It also involves the movements of the gear lever being transmitted to a lateral thrust shaft which is movable in a transverse direction relative to the main shaft and the countershaft, and being transmitted to a longitudinal shaft which is moved parallel with the main shaft and the countershaft. The various shafts effect engagement/disengagement of the gearwheels along the countershaft and the main shaft.

Connecting/disconnecting the gearwheels quickly and correctly to/from the respective shafts round which they are arranged entails the application of a considerable axially directed force to the shafts. A particularly large amount of force is required at low temperatures at which the viscosity of the lubricant changes, causing the various parts in the gearbox to slide less easily relative to one another. One way of alleviating this is to provide a compressed air cylinder associated with the respective shaft to assist the shaft movement, in which case the compressed air cylinder is situated in an extension of the respective shaft so that when compressed air from the vehicle's compressed air system is supplied the compressed air cylinder assists the shaft movement.

The compressed air cylinder has a longitudinal spindle and a piston which is situated in a circular cylindrical cavity and in which the spindle is fastened. The piston and the spindle are movable between at least two different positions in the cavity. The piston's placing in the cavity results in a space V1 on one side of the piston and a space V2 on the opposite side of the piston. The piston and hence the lateral thrust shaft connected to it can be moved in desired directions by connecting the compressed air and pressurising the respective spaces V1 and V2.

When compressed air is supplied to the space V1 or V2, the piston moves quickly towards one of the extreme positions, at which it stops when it hits the surrounding casing of the cylinder. This impact gives rise to a loud clattering noise when the piston hits the casing.

There are various different solutions for damping this clattering noise. One variant is to provide an impact-damping elastic element between the contact surfaces of the piston and of the casing. The disadvantage of that solution is that after a time the impact-damping element disintegrates, leading to loss of damping and, in the worse case, to the remaining fragments retarding or locking the piston in the casing.

Another solution for damping this clattering noise is to place a permanent constriction on the compressed air supply to the respective spaces in order to reduce the speed of the piston so that it does not move so quickly towards the casing. However, the constriction also slows down the actual gear change, a clear disadvantage in that rapid gear changing is important for the gearbox.

A further damping device is hydraulic damping, but this is expensive in that it is complicated, requires maintenance and does not work satisfactorily at low temperatures.

DE 102007002539 A1 shows an arrangement and method for damping a piston movement in a compressed air cylinder where the piston is movable between two positions in the compressed air cylinder. The piston is placed in the cylinder so that a space is formed on each side of the piston and that each space is connected to a compressed air source. In order to damp the cylinder, air is added to the space that is decreased by the piston's movement before the air that moves the piston is added to the other space. This method, however, only works when the piston only has two stable positions.

There is therefore need for an effective arrangement, which does not suffer from the disadvantages described above, for damping of the piston so that it does not hit the casing.

### Summary of the invention

The object of the present invention is to eliminate the above problem. It is achieved by an arrangement according to the first independent claim, and by a method according to the second independent claim.

The arrangement for damping of a piston movement in a compressed air cylinder comprises:
- a compressed air cylinder with at least one longitudinal spindle intended to transmit force from the compressed air cylinder, said compressed air cylinder comprising a casing within which a piston joined to the longitudinal spindle is so placed that a space is formed on each side of the piston and that each space has a compressed air hose or pipe connected to it;
- a valve device arranged along each compressed air hose or pipe;
- a compressed air device for supply of compressed air to each space via the respective compressed air hose or pipe, and
- a control unit connected to each valve device in order to control when compressed air is supplied to, and when it is allowed to leave, the spaces in the compressed air cylinder via the compressed air hoses or pipes.

The arrangement according to the invention is characterised in that the control unit comprises means for controlling the valve devices in such a way that by controlling the supply of compressed air to either of the spaces in the compressed air cylinder it generates a movement of the piston and the spindle thereto connected, and also controls the valve devices so that compressed air is supplied to the other space before the movement of the piston has begun, in order thereby to damp the movement of the piston.

The damping medium used by the arrangement is thus compressed air which is already available in the arrangement for generating the desired piston movement. This arrangement therefore involves extremely few components in that the damping medium, the compressed air, is supplied to and removed from the compressed air cylinder via the two compressed air hoses which are also used for generating the desired piston movement of the compressed air cylinder.

The arrangement results in very good damping of the piston before it meets the casing of the compressed air cylinder, without being complicated and hence expensive. The good damping is achieved by the compressed air used for damping the movement of the piston being supplied already before the movement of the piston begins.

An embodiment of the arrangement comprises means for detecting the position of the piston. A detected position is passed on as a parameter to the control unit and is used therein to determine when compressed air has to be supplied to the spaces for optimum damping. This determination of the piston's position makes it possible for the damping to be varied and adjusted in response to surrounding factors such as the compressed air cylinder's temperature, which considerably affects the piston's speed of movement.

In an embodiment of the arrangement, the means for detecting the position of the piston is situated in an axial extension of the spaces and comprises a second spindle coaxial with the first spindle but situated on the opposite side of the piston from the first spindle, and a position determination unit comprising a recess in which the second spindle moves so that the piston's position in the compressed air cylinder can be detected. This type of means for detecting the position of the piston provides a reliable and precise determination of its position from which its movement can also be determined.

In the arrangement, the piston is movable between three positions in the compressed air cylinder, the middle position being a position of rest to which the piston is returned by a coil spring placed round the spindle between the piston and the casing on each side of the piston. The configuration of the compressed air cylinder may vary depending on the application in which it is to be used. Irrespective of the configuration of the arrangement, the result is a reliable arrangement and very good damping of the piston movement.

In an embodiment of the arrangement, the valve device is a solenoid valve which makes it possible to control with satisfactory precision the compressed air flow to and from the compressed air cylinder's spaces.

The arrangement according to the invention may with advantage be used in a gearbox in which the compressed air cylinder's longitudinal spindle is connected to any of the shafts of the gearbox which are used in connecting/disconnecting the various gear positions in the gearbox. The arrangement according to the invention reduces the wear on the constituent parts of the gearbox and the amount of noise generated each time the piston hits the compressed air cylinder's casing.

When the arrangement is used in a gearbox, the compressed air cylinder's longitudinal spindle may with advantage be connected to a lateral thrust shaft in the gearbox. The lateral thrust shaft is transversal relative to the main shaft and the countershaft of the gearbox.

The present invention relates also to a method for damping of a piston movement in an arrangement as above, which method comprises the steps of:
- the control unit activating the valve device so that the space to be used for damping of the piston's movement is pressurised at least once before the piston's movement begins, in order thereby to damp the piston's movement before it reaches the casing;
- the control unit activating the valve device to pressurise the space which generates the piston movement in the desired direction.

This method provides very good damping of the piston movement without requiring major modifications of existing compressed air cylinders.

An embodiment of the method comprises also the step of detecting the piston's position and of the control unit using that information for reliable control of the pressurisation of the spaces in the compressed air cylinder. This further step makes it possible to achieve more precise control of the piston damping on the basis of prevailing conditions.

In the method, the two spaces are pressurised simultaneously, which is a simple and therefore reliable way of utilising the desired damping, resulting in less complicated control units and control means.

An embodiment of the method comprises also the step of the air in the space used for damping the piston's movement being allowed, some time after the space has been pressurised, to leave the space via the compressed air hose or pipe by the control unit opening the compressed air valve. This further step represents a further parameter for optimising the piston damping.

### Brief description of the drawings

The invention is explained in more detail below with reference to its embodiments depicted in the drawings, in which:
- Figure 1: depicts schematically a compressed air cylinder according to prior art.
- Figure 2: depicts schematically an embodiment of a compressed air cylinder according to t§he invention.
- Figure 3: is a schematic diagram of an alternative for pressurisation of the compressed air cylinder's spaces.

### Detailed description of the invention

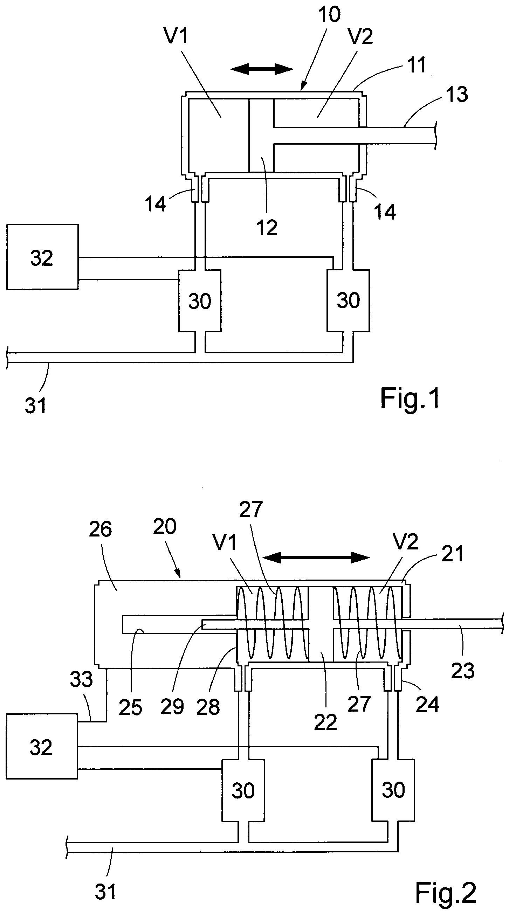

Figure 1 depicts schematically a a very simple compressed air cylinder 10. The compressed air cylinder comprises a casing 11 which houses a piston 12 and a longitudinal spindle 13 which is connected thereto and which extends from the centre of one side of the piston, through one end wall of the compressed air cylinder 10 and out from the casing 11 so that the axial movement generated by the compressed air cylinder can be put to appropriate use in desired applications.

The internal cavity of the compressed air cylinder 10 is substantially circular cylindrical but other shapes are also possible provided that they conform to the shape of the piston. For the compressed air cylinder to function as intended it is important for there to be good seals between the outer periphery of the piston and the inside of the cavity, and between the periphery of the spindle and the outlet in the casing end wall. There are various types of sliding seals which may be placed on the outer periphery of the piston and on the inner surface of the outlet. The configuration of the outside of the casing may vary depending on the application in which the compressed air cylinder is to be used.

A space whose magnitude (volume) depends on the piston's position in the compressed air cylinder is formed in the cavity on each side of the piston 12. In Figures 1 and 2, one space is designated V1 and the space on the opposite side of the piston is designated V2. As previously mentioned, the volume of these spaces depends on the piston's axial position in the cavity. In the cylinder depicted in Figure 1, the piston and the spindle connected to it are movable between two different positions at the respective ends of the cavity, whereas the piston in the embodiment of the compressed air cylinder depicted in Figure 2 is movable between three different positions.

At each end of the compressed air cylinder, a compressed air hose 14 with associated compressed air valve 30 is connected to the cavity near to the respective end wall in such a way that one hose leads into the space V1 and the other hose leads into the space V2 on the opposite side of the piston. The respective compressed air hoses 14 are connected to a compressed air source 31 which constantly supplies them with compressed air. The piston and hence the spindle connected to it can be moved in desired directions between the two positions by opening the valve and thereby connecting the compressed air and pressurising the respective spaces V1 and V2.

Figure 2 depicts an embodiment of a compressed air cylinder 20. This compressed air cylinder likewise has a surrounding casing 21 which contains a substantially circular cylindrical cavity and a piston 22 and a longitudinal spindle 23 connected thereto. In this case the spindle 23 extends out from both sides of the centre of the piston. On one side of the piston it extends from the piston, through the space V2 on that side of the piston and out from the casing 21 so that the axial movement generated by the compressed air cylinder can be put to appropriate use.

On the other side of the piston 22, a second spindle 29 extends coaxially with the first spindle 23. The second spindle 29 serves as part of a position determination unit 26 situated in the axial extension of the space. The position determination unit 26 comprises also a recess 25 situated at the centre of the end wall 28 of the space. When the piston 22 moves towards or away from the end wall 28, the second spindle 29 moves in the recess 25 which is at least as long as the length of the second spindle 29. The position determination unit 26 detects the position of the spindle in the recess 25 and makes it possible to detect the piston's speed of movement in the compressed air cylinder. The position determination unit is of course also usable in combination with the first embodiment of the compressed air cylinder.

The compressed air cylinder comprises also two coil springs 27 each situated in an axial direction between the end wall of the respective space and the respective side of the piston. The main function of these coil springs is to return the piston and the associated spindles to the piston's position of rest at substantially the centre of the compressed air cylinder in cases where the piston is movable in two axial directions in the compressed air cylinder from the position of rest. As in the compressed air cylinder embodiment described above, this compressed air cylinder is provided with compressed air hoses 24 and compressed air valves, not depicted, situated at the respective ends of the cavity.

The compressed air valves, whatever their configuration, are controlled by a control unit 32 which comprises control means such as programme codes for effecting desired control of the compressed air valves on the basis of certain parameters. If the compressed air cylinder is provided with position determination devices for detecting the piston's position and speed, this is a parameter used inter alia by the control unit.

When the axial movement generated by the compressed air cylinders as described above is needed, a control unit activates the compressed air valve which, upon pressurisation and supply of compressed air to the selected space, generates the desired piston and spindle movement. With the object however of achieving damping of the piston movement, the control unit, either before or at the same time as it activates the space to achieve the piston movement, activates the compressed air valve which pressurises the second space in the compressed air cylinder so that the compressed air in that space serves as damping medium and damps the piston movement. The compressed air in that space will thereby effectively damp the piston movement before the piston reaches the end of the cavity.

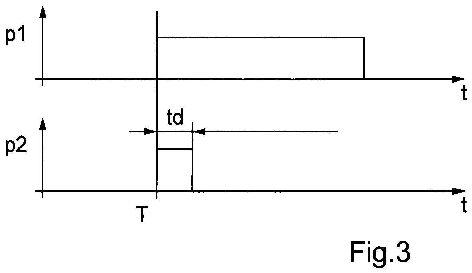

The pressurisation of the space used for damping of the piston movement may take place at any time ranging from shortly before the pressurisation of the space for generating the piston movement to simultaneously with the pressurisation of the space which generates the piston movement. However, to achieve the desired damping of the piston, the pressurisation of the space to damp the piston movement has always to be activated before the piston's movement in the compressed air cylinder begins. An example of this is depicted schematically in Figure 3, in which the pressurisation p1 denoting the pressurisation of the space for generating the piston movement, and p2 which constitutes the piston damping are illustrated as a function of time. In Figure 3, the space V1 for the piston movement and the damping space V2 are pressurised simultaneously at a time T, but the pressure p2 in space V2 is removed after a time t_{d}.

The compressed air is thus used partly to generate the desired piston movement, but also as damping medium by means of the control unit which, on selected occasions, activates the pressurisation of the opposite space in order to damp the piston's movement.

The pressurisation of the space which is to damp the piston movement is ended by the control unit opening the compressed air valve, whereupon the force of the piston causes the air in the space to flow out from the space via the compressed air hose and out into the surrounding air.

The invention is described above in the form of various embodiments, but a number of modifications are conceivable, such as:
- The compressed air cylinder may be configured in various different ways, e.g. as regards its cross-sectional shape.
- The compressed air cylinder might have more positions in which the piston can rest.
- The control unit may be configured and adapted to suit desired damping characteristics.

Although it has been described on the basis of some exemplifying embodiments, the invention is not limited to them but is defined on the basis of the accompanying claims.

## Claims

1. An arrangement for damping of a piston movement in a compressed air cylinder (10; 20), which arrangement comprises:
- a compressed air cylinder (10; 20) with at least one longitudinal spindle (13; 23) intended for transmission of force from the compressed air cylinder (10; 20), which compressed air cylinder comprises a casing (11; 21) within which a piston (12; 22) joined to the longitudinal spindle is placed in such a way that a space (V1, V2) is formed on each side of the piston and that each space (V1, V2) has a compressed air hose (14; 24) or pipe connected to it;
- a valve device (30) arranged along each compressed air hose or pipe;
- a compressed air device (31) for supplying compressed air to each space (V1, V2) via respective compressed air hoses (14; 24) or pipes, and
- a control unit (32) connected to each valve device (30) to control when compressed air is supplied to, and when it is allowed to leave, the spaces (V1, V2) in the compressed air cylinder (10; 20) via the compressed air hoses (14; 24) or pipes,
which control unit (32) also comprises means for controlling the valve devices (30) in such a way that by controlling the supply of compressed air to the respective spaces (V1, V2) in the compressed air cylinder (10; 20) it generates a movement of the piston (12; 22) and the spindle (13; 23) thereto connected, wherein the control unit (32) is adapted such that the valve devices (30) are controlled so that compressed air is supplied to the second space (V1, V2) before the movement of the piston (12; 22) has begun, in order thereby to damp the movement of the piston (12; 22), **characterised in that** the piston (12, 22) is movable between three positions in the compressed air cylinder (20), the middle position being a position of rest to which the piston (22) is returned by a coil spring (27) placed round the spindle (23) between the piston (22) and the casing (21) on each side of the piston (22) and **in that** the control unit (32) is adapted such that the valve devices are controlled so that the pressurisation of both spaces (V1, V2) starts at the same time (T).

2. An arrangement according to claim 1, **characterised in that** the arrangement comprises means for detecting the position of the piston (22), making it possible for a detected position to be transmitted as a parameter to the control unit (32) via a line (33) in order to determine when compressed air has to be supplied to the spaces (V1, V2).

3. An arrangement according to claim 2, **characterised in that** the means for detecting the position of the piston (22) is situated in an axial extension of the spaces and comprises a second spindle (29) which is coaxial with the first spindle (23) and situated on the opposite side of the piston (22) from the first spindle (23), and a position determination unit (26) comprising a recess (25) in which the second spindle (29) moves so that the position of the piston (22) in the compressed air cylinder can be detected.

4. An arrangement according to any one of the foregoing claims, **characterised in that** the valve device (30) is a solenoid valve.

5. A gearbox which comprises an arrangement according to any one of claims 1-4 and is such that the longitudinal spindle (13; 23) of the compressed air cylinder (10; 20) is connected to any of the shafts of the gearbox which are used when connecting/disconnecting the various gear positions in the gearbox.

6. A gearbox according to claim 5, **characterised in that** the longitudinal spindle (13; 23) is connected to a lateral thrust shaft in the gearbox.

7. A method for damping of a piston movement in an arrangement according to any one of claims 1 to 4, which method comprises the steps of:
- the control unit (32) activating the valve device (30) so that space (V1, V2) to be used for damping of the movement of the piston (12; 22) is pressurised at least once before the movement of the piston (12; 22) begins, in order thereby to damp the movement of the piston (12; 22) before it reaches the casing (11; 21);
- the control unit (32) activating the valve device (30) to pressurise the space (V1, V2) which generates the piston movement in the desired direction wherein the pressurisation of the spaces (V1, V2) starts at the same time (T).

8. A method according to claim 7, comprising also the step of detecting the position of the piston (22) in the compressed air cylinder (20) and such that the control unit (32) uses that information for reliable control of the pressurisation of the spaces (V1, V2).

9. A method according to any one of claims 7 or 8, comprising also the step of returning the piston (22) to a position of rest.

10. A method according to any one of claims 7 to 9, comprising also the step of the air in the space (V1, V2) which is used for damping of the movement of the piston (12; 22) being allowed, some time after the space (V1, V2) has been pressurised, to leave the space (V1, V2) via the compressed air hose (14; 24) or pipe by the control unit opening the valve device (30).

## Patentansprüche

1. Anordnung zum Dämpfen einer Kolbenbewegung in einem Druckluftzylinder (10; 20), wobei die Anordnung umfasst:
einen Druckluftzylinder (10; 20) mit wenigstens einer länglichen Spindel (13; 23) zum Übertragen einer Kraft von dem Druckluftzylinder (10; 20), wobei der Druckluftzylinder ein Gehäuse (11; 21) umfasst, in dem ein mit der länglichen Spindel verbundener Kolben (12; 22) derart angeordnet ist, dass auf jeder Seite des Kolbens ein Raum (V1, V2) ausgebildet ist und dass jeder Raum (V1, V2) einen daran angeschlossenen Schlauch (14; 24) oder eine daran angeschlossene Röhre aufweist;
eine entlang jedes Druckluftschlauchs oder jeder Druckluftröhre angeordnete Ventilvorrichtung (30);
eine Druckluftvorrichtung (31) zum Zuführen von Druckluft zu jedem Raum (V1, V2) über entsprechende Druckluftschläuche (14; 24) oder -röhren; und
eine mit jeder Ventilvorrichtung (30) verbundene Steuereinheit (32) zum Steuern wann Druckluft den Räumen (V1, V2) in dem Druckluftzylinder (10; 20) über die Druckluftschläuche (14; 24) oder -röhren zugeführt wird und entweichen darf,
wobei die Steuereinheit (32) ferner ein Mittel umfasst, um die Ventilvorrichtungen (30) so zu steuern, dass das Steuern des Zuführens von Druckluft zu den entsprechenden Räumen (V1, V2) in dem Druckluftzylinder (10; 20) eine Bewegung des Kolbens (12; 22) und der damit verbundenen Spindel (13; 23) erzeugt,
wobei die Steuereinheit (32) derart eingerichtet ist, dass die Ventilvorrichtungen (30) so steuerbar sind, dass Druckluft dem zweiten Raum (V1, V2) zugeführt wird, bevor die Bewegung des Kolbens (12; 22) begonnen hat, um dadurch die Bewegung des Kolbens (12; 22) zu dämpfen,
**dadurch gekennzeichnet, dass** der Kolben (12; 22) zwischen drei Positionen in dem Druckluftzylinder (20) bewegbar ist, wobei die Mittelposition eine Ruheposition ist, zu der der Kolben (22) mittels einer Spiralfeder (27) zurückgeführt wird, die um die Spindel (23) herum zwischen dem Kolben (22) und dem Gehäuse (21) auf jeder Seite des Kolbens (22) angeordnet ist, und dadurch, dass die Steuereinheit (32) derart eingerichtet ist, dass die Ventilvorrichtungen so steuerbar sind, dass die Druckbeaufschlagung beider Räume (V1, V2) zur selben Zeit (T) beginnt.

2. Anordnung nach Anspruch 1, **dadurch gekennzeichnet, dass** die Anordnung ein Mittel zum Erfassen der Position des Kolbens (22) umfasst, das es ermöglicht, eine erfasste Position als ein Parameter an die Steuereinheit (32) über eine Leitung (33) zu übermitteln, um zu bestimmen, wann Druckluft den Räumen (V1, V2) zuzuführen ist.

3. Anordnung nach Anspruch 2, **dadurch gekennzeichnet, dass** das Mittel zum Erfassen der Position des Kolbens (22) in einer axialen Erweiterung der Räume angeordnet ist und eine zweite Spindel (29) umfasst, die koaxial zu der ersten Spindel (23) und an der der ersten Spindel (23) entgegengesetzten Seite des Kolbens (22) angeordnet ist, und wobei eine Positionsbestimmungseinheit (26) eine Ausnehmung (25) umfasst, in der sich die zweite Spindel (29) so bewegt, dass die Position des Kolbens (22) in dem Druckluftzylinder erfassbar ist.

4. Anordnung nach einem der vorangehenden Ansprüche, **dadurch gekennzeichnet, dass** die Ventilvorrichtung (30) ein Elektromagnetventil ist.

5. Getriebe, das eine Anordnung nach einem der Ansprüche 1 bis 4 umfasst und derart ausgebildet ist, dass die längliche Spindel (13; 23) des Druckluftzylinders (10; 20) mit einer der Wellen des Getriebes verbunden ist, die beim Verbinden/Trennen der verschiedenen Gangstellungen in dem Getriebe verwendet werden.

6. Getriebe nach Anspruch 5, **dadurch gekennzeichnet, dass** die längliche Spindel (13; 23) mit einer seitlichen Druckwelle in dem Getriebe verbunden ist.

7. Verfahren zum Dämpfen einer Kolbenbewegung in einer Anordnung nach einem der Ansprüche 1 bis 4, wobei das Verfahren die Schritte umfasst:
- Aktivieren der Ventilvorrichtung (30) mittels der Steuereinheit (32), sodass der zum Dämpfen der Bewegung des Kolbens (12; 22) vorgesehene Raum (V1, V2) druckbeaufschlagt wird, zumindest kurz bevor die Bewegung des Kolbens (12; 22) beginnt, um dadurch die Bewegung des Kolbens (12; 22) zu dämpfen, bevor dieser das Gehäuse (11; 21) erreicht;
- Aktivieren der Ventilvorrichtung (30) mittels der Steuereinheit (32), um den Raum (V1, V2) mit Druck zu beaufschlagen, der die Kolbenbewegung in der gewünschten Richtung erzeugt, wobei das Druckbeaufschlagen der Räume (V1, V2) zur selben Zeit (T) beginnt.

8. Verfahren nach Anspruch 7, das ferner den Schritt des Erfassens der Position des Kolbens (22) in dem Druckluftzylinder (20) umfasst, sodass die Steuereinheit (32) diese Information zum zuverlässigen Steuern des Druckbeaufschlagens der Räume (V1, V2) nutzt.

9. Verfahren nach einem der Ansprüche 7 oder 8, das ferner den Schritt des Zurückführens des Kolbens (22) zu der Ruheposition umfasst.

10. Verfahren nach einem der Ansprüche 7 bis 9, das ferner den Schritt umfasst, in dem der Luft in dem Raum (V1, V2), der zum Dämpfen der Bewegung des Kolbens (12; 22) verwendet wird, erlaubt wird, zu einem Zeitpunkt nachdem der Raum (V1, V2) druckbeaufschlagt worden ist, den Raum (V1, V2) über den Druckluftschlauch (14; 24) oder die Druckluftröhre zu verlassen, indem die Steuereinheit die Ventilvorrichtung (30) öffnet.

## Revendications

1. Dispositif pour amortir un mouvement de piston dans un cylindre à air comprimé (10 ; 20), lequel dispositif comprend :
- un cylindre à air comprimé (10 ; 20) ayant au moins une broche longitudinale (13 ; 23) destinée à transmettre une force à partir du cylindre à air comprimé (10 ; 20), lequel cylindre à air comprimé comprend un carter (11 ; 21) à l'intérieur duquel est disposé un piston (12 , 22) relié à la broche longitudinale, de telle sorte qu'un espace (V1, V2) est formé sur chaque côté du piston, et que chaque espace (V1, V2) comporte un flexible (14 ; 24) ou tuyau d'air comprimé connecté à celui-ci ;
- un dispositif de soupape (30) disposé le long de chaque flexible ou tuyau d'air comprimé ;
- un dispositif d'air comprimé (31) pour alimenter de l'air comprimé dans chaque espace (V1, V2) par l'intermédiaire de flexibles (14 ; 24) ou tuyaux d'air comprimé respectifs, et
- une unité de commande (32) connectée à chaque dispositif de soupape (30) pour commander, lorsque de l'air comprimé est alimenté dans les espaces (V1, V2), et lorsqu'il est autorisé à quitter ceux-ci dans le cylindre à air comprimé (10 ; 20) par l'intermédiaire des flexibles (14 ; 24) ou tuyaux d'air comprimé,
laquelle unité de commande (32) comprend également des moyens pour commander les dispositifs de soupape (30) de telle manière qu'en commandant l'alimentation d'air comprimé dans les espaces respectifs (V1, V2) dans le cylindre à air comprimé (10 ; 20), cela génère un mouvement du piston (12 ; 22) et de la broche (13 ; 23) connectée à celui-ci, dans lequel l'unité de commande (32) est adaptée de telle sorte que les dispositifs de soupape (30) sont commandés de manière à ce que l'air comprimé est alimenté dans le second espace (V1, V2) avant que le mouvement du piston (12 ; 22) ait commencé, afin d'amortir ainsi le mouvement du piston (12 ; 22), **caractérisé en ce que** le piston (12 , 22) est mobile entre trois positions dans le cylindre à air comprimé (20), la position médiane étant une position de repos dans laquelle le piston (22) est rappelé par un ressort hélicoïdal (27) placé autour de la broche (23) entre le piston (22) et le carter (21) sur chaque côté du piston (22), et **en ce que** l'unité de commande (32) est adaptée de sorte que les dispositifs de soupape sont commandés de manière à ce que la pressurisation des deux espaces (V1, V2) débute au même instant (T).

2. Dispositif selon la revendication 1, **caractérisé en ce que** le dispositif comprend des moyens pour détecter la position du piston (22), en permettant la transmission d'une position détectée en tant que paramètre à l'unité de commande (32) par l'intermédiaire d'une ligne (33) afin de déterminer quand de l'air comprimé doit être alimenté dans les espaces (V1, V2).

3. Dispositif selon la revendication 2, **caractérisé en ce que** les moyens pour détecter la position du piston (22) sont situés dans un prolongement axial des espaces et comprennent une seconde broche (29) qui est coaxiale à la première broche (23) et située sur le côté du piston (22) opposé à la première broche (23), et une unité de détermination de position (26) comprenant un évidement (25) dans lequel la seconde broche (29) se déplace, de sorte que la position du piston (22) dans le cylindre à air comprimé peut être détectée.

4. Dispositif selon l'une quelconque des revendications précédentes, **caractérisé en ce que** le dispositif de soupape (30) est une électrovanne.

5. Boîte de vitesses qui comprend un dispositif selon l'une quelconque des revendications 1 à 4, et est telle que la broche longitudinale (13 ; 23) du cylindre à air comprimé (10 ; 20) est connectée à l'un quelconque des arbres de la boîte de vitesses qui sont utilisés lors de la connexion/déconnexion des diverses positions de vitesse de la boîte de vitesses.

6. Boîte de vitesses selon la revendication 5, **caractérisée en ce que** la broche longitudinale (13 ; 23) est connectée à un arbre de poussée latérale de la boîte de vitesses.

7. Procédé d'amortissement d'un mouvement de piston dans un dispositif selon l'une quelconque des revendications 1 à 4, lequel procédé comprend les étapes suivantes :
- l'unité de commande (32) actionne le dispositif de soupape (30) de sorte que l'espace (V1, V2) à utiliser pour amortir le mouvement du piston (12 ; 22) est pressurisé au moins une fois avant le début du mouvement du piston (12 ; 22), afin d'amortir ainsi le mouvement du piston (12 ; 22) avant qu'il n'atteigne le carter (11 ; 21) ;
- l'unité de commande (32) actionne le dispositif de soupape (30) pour pressuriser l'espace (V1, V2) qui génère le mouvement de piston dans la direction souhaitée, dans lequel la pressurisation des espaces (V1, V2) débute au même instant (T).

8. Procédé selon la revendication 7, comprenant également l'étape de détection de la position du piston (22) dans le cylindre à air comprimé (20) de telle sorte que l'unité de commande (32) utilise ces informations pour une commande fiable de la pressurisation des espaces (V1, V2).

9. Procédé selon l'une quelconque des revendications 7 ou 8, comprenant également l'étape de rappel du piston (22) à une position de repos.

10. Procédé selon l'une quelconque des revendications 7 à 9, comprenant également l'étape autorisant l'air situé dans l'espace (V1, V2) qui est utilisé pour amortir le mouvement du piston (12 ; 22), un certain temps après que l'espace (V1, V2) ait été pressurisé, à quitter l'espace (V1, V2) par l'intermédiaire du flexible (14 ; 24) ou tuyau d'air comprimé par l'unité de commande ouvrant le dispositif de soupape (30).
